# EUROPÄISCHE PATENTANMELDUNG

(11) **EP 2 128 802 A1**
(43) Veröffentlichungstag der Anmeldung: **02.12.2009**
(21) Anmeldenummer: 08009812.2
(22) Anmeldetag: 29.05.2008
(51) Int. Cl.: G06K 19/06, F16J 15/00

(54) **Bauteil versehen mit einer maschinenlesbaren Kennzeichnung**

(71) Anmelder: Carl Freudenberg KG, 69469 Weinheim (DE)
(72) Erfinder: Ewald, Kurt, 67227 Frankenthal (DE); Geubert, Christian, 64625 Bensheim (DE); Helms, Jan, 64283 Darmstadt (DE); Kritzer, Peter, 67147 Forst (DE); Wieland, Thorsten, 69469 Weinheim (DE)

(57) **Zusammenfassung**

Bauteil (1) mit zumindest einem Element (2) mit einer gekrümmten Oberfläche (3) , wobei das Element (2) mit einer codierten elektronisch auslesbaren Kennzeichnung (4) versehen ist, die als topographische Kennzeichnung (4) in die Oberfläche eingebracht ist, wobei die Kennzeichnung (4) derart ausgebildet ist, dass sie mit einem Auslesegerät in zwei Dimensionen auslesbar ist.

## Beschreibung

### Technisches Gebiet

Die Erfindung betrifft ein Bauteil mit zumindest einem Element mit einer gekrümmten Oberfläche, wobei das Element mit einer codierten elektronisch auslesbaren Kennzeichnung versehen ist, die als topographische Kennzeichnung in die Oberfläche eingebracht ist.

### Stand der Technik

Derartige Bauteile sind aus der EP 1 354 304 B1 bekannt. Dort ist ein Verfahren beschrieben, Bauteile durch Aufbringen einer Markierung fälschungssicher zu kennzeichnen. Dazu wird ein Etikett mit detektierbaren Partikel versehen, die in einem Zufallsmuster auf dem Etikett verteilt sind. Diese Partikel werden mittels eines optischen Systems erfasst und gespeichert und können durch wiederholtes Auslesen erneut eindeutig zugeordnet werden. Beispielhaft wird das Markieren eines Reifens mittels eines Etiketts beschrieben. Auch bei Maschinenelementen werden die Fälschungssicherheit und die Nachvollziehbarkeit der Herstellung immer wichtiger, da beispielsweise gefälschte minderwertige Dichtungen vorzeitig verschleißen können oder die geforderte Dichtwirkung gar nicht erbringen und so immense Schäden verursachen können. Des Weiteren bietet eine Kennzeichnung Vorteile in der Produktionssteuerung, Logistik und Abrechnung. Dabei sollen die in der Kennzeichnung gespeicherten Informationen mehrfach redundante vorhanden sein. Redundant bedeutet, dass die Informationen mehrfach und in verschiedenen Formen in der Kennzeichnung erhalten sind, damit das Auslesen der Kennzeichnung auch dann noch möglich ist, wenn ein Großteil der Kennzeichnung beispielsweise durch Abnutzung des Bauteils zerstört ist. Die Schwierigkeit bei kleinen Bauteilen mit gekrümmter, beispielsweise torusförmiger Oberfläche besteht darin, in der Kennzeichnung eine Vielzahl von Informationen mehrfach redundant auf das Bauteil aufzubringen, so dass die Kennzeichnung mit üblichen Auslesegeräten auslesbar ist.

### Darstellung der Erfindung

Der Erfindung liegt die Aufgabe zugrunde, die Kennzeichnung so weiter zu entwickeln, dass sie trotz einer Vielzahl mehrfach redundant gespeicherter Informationen einfach auslesbar ist und auf kleine Flächen aufgebracht werden kann.

Diese Aufgabe wird mit den Merkmalen von Anspruch 1 gelöst. Auf vorteilhafte Ausgestaltungen nehmen die Unteransprüche Bezug.

Zur Lösung der Aufgabe ist die Kennzeichnung derart ausgebildet, dass sie mit einem Auslesegerät in zwei Dimensionen auslesbar ist. Dazu wird die Kennzeichnung so gestaltet, dass sie auf eine gekrümmte Oberfläche aufgebracht und vorzugsweise in den Regionen angeordnet wird, bei denen eine bei einer zweidimensionalen Projektion keine oder nur eine geringe Verzerrung erfolgt. Dadurch kann die Kennzeichnung auch mit herkömmlichen, also für flächige Objekte ausgelegten Lesegeräten ausgelesen werden und es ist nicht erforderlich, die Kennzeichnung durch rechnerische Verfahren zu entzerren. Vorteilhafterweise folgt die Kennzeichnung der Oberfläche in einem Bereich mit geringer Verzerrung.

Die Kennzeichnung kann eine nicht-rechteckige Gestalt aufweisen. Dabei ergibt sich eine Formenvielfalt, die sich primär an der Gestalt des zu kennzeichnenden Bauteils ergibt. Die Kennzeichnung kann kreisförmig, kreisringförmig oder eine beliebige andere Gestalt annehmen. Die Kennzeichnung kann dabei einen ungeraden Begrenzungsrand aufweisen.
Eine derartige Kennzeichnung kann einen gezackten Begrenzungsrand oder einen Begrenzungsrand nach Art einer Freihandlinie aufweisen.

Die Kennzeichnung kann in Segmente eingeteilt sein. Dazu werden die in der Kennzeichnung enthaltenen codierten Zeichen aufgeteilt und in mehreren Segmenten angeordnet. Die vollständige Kennzeichnung ergibt sich nach Auslesen aller Segmente oder je nach Redundanz eines Teils der Segmente. Durch die Aufteilung in Segmente kann die Kennzeichnung in einer großen Formenvielfalt auf das Bauteil aufgebracht werden. Dadurch können auch stark gekrümmte Bauteile mit einer aussagekräftigen und redundanten Kennzeichnung versehen werden, da die Segmente verteilt angeordnet werden können. Die Segmente können eine rechteckige Gestalt aufweisen, wobei sich durch die Anordnung der Segmente zu einer Kennzeichnung eine nicht-rechteckige Gesamtform der Kennzeichnung ergibt. Die Segmente können auch voneinander abweichende Abmessungen aufweisen.

Die Segmente können unmittelbar aneinander angrenzen oder voneinander beabstandet sein. Dabei können die Segmente zueinander versetzt oder zueinander verdreht ausgerichtet sein. Sind die Segmente zueinander versetzt, ergeben sich treppenförmige Strukturen, wobei die Segmente direkt aneinander grenzen oder voneinander beabstandet sein können. Durch den treppenförmigen Versatz können runde oder andere nicht-rechtwinklige Strukturen nachgebildet werden. Sind die Segmente zueinander verdreht, also verkippt, können die Segmente beispielsweise auf kreisringförmigen Bauteilen angeordnet werden, wobei nahezu die gesamte Oberfläche des Bauteils die mit nur geringen Verzerrungen zweidimensional projizierbar ist, für die Kennzeichnung nutzbar und auch einfach auslesbar ist.

Die Kennzeichnung kann einzelne auslesbare Zeichen enthalten, die zueinander versetzt angeordnet sein können. Dabei können die Zeichen alternativ oder zusätzlich um einen gemeinsamen Mittelpunkt angeordnet sein. Für die Zeichen gilt grundsätzlich das Gleiche wie für die zuvor beschriebenen Segmente. In diesem Fall ist es nicht erforderlich, die Kennzeichnung in einzelne Segmente aufzuteilen, die Zeichen können vielmehr innerhalb der Kennzeichnung versetzt und verdreht werden. Es ist jedoch auch denkbar, die Zeichen innerhalb der Segmente zu versetzen und zu verdrehen.

Die Kennzeichnung kann sich über mehrere Elemente des Bauteils erstrecken. Bei Verbundteilen, die aus mehreren Werkstoffen bestehen erhöht sich dadurch die Fälschungssicherheit, da mehrere Elemente gekennzeichnet sind. Dazu kann die Kennzeichnung in Segmente aufgeteilt sein, wobei die Segmente über die Elemente verteilt werden. Die komplette Kennzeichnung ergibt sich nach Auslesen der einzelnen über die Elemente verteilten Segmente.

Das Element kann ein O-Ring oder der elastomere Abschnitt eines Dichtelementes sein. Dabei kann die Kennzeichnung in eine Funkfionsfläche des Elementes eingebracht sein. Insbesondere bei Dichtungsbauteilen ist es erforderlich, deren nichtmetallische Bestandteil zu kennzeichnen. Häufig bestehen Dichtungen aus einem Dichtungswerkstoff-Metall-Verbund, wobei für gefälschte Produkte originale Metallteile wieder verwendet werden können. Daher ist es nicht zweckmäßig, nur das Metallteil zu kennzeichnen, sondern das für die Dichtfunktion verantwortliche und wesentlich kritischere und für den Verschleiß anfälligere Element aus Dichtungswerkstoff, unter Umständen auch die Funktionsfläche zu kennzeichnen. Überraschenderweise wurde dabei festgestellt, dass die Funktion einer Dichtung nicht beeinträchtigt ist, wenn eine Funktionsfläche mit einer Lasermarkierung versehen ist, die auf die Oberfläche aufgebracht ist und einen Materialabtrag bewirkt. Insbesondere hat sich gezeigt, dass erfindungsgemäß gekennzeichnete Bauteile auch erhöhten hygienischen Anforderungen genügen und in der Kennzeichnung kein unerlaubtes Keimwachstum stattfindet. Derartig gekennzeichnete Dichtungen können insbesondere als Dichtringe unterschiedlichen Querschnitts, Radialwellendichtringe, Flachdichtungen oder Ventilschaftdichtungen ausgebildet sein. Insbesondere bei O-Ringen und vergleichbaren Dichtelementen ist es vorteilhaft, die Kennzeichnung in eine Funktionsfläche einbringen zu können, da bei O-Ringen nicht von vornherein festgelegt ist, welcher Flächenabschnitt nach Montage für die Dichtfunktion wesentlich ist. Es ist aber auch denkbar, die Kennzeichnung in eine Fläche einzubringen die schräg, also nicht weder axial noch radial, ausgerichtet ist. Diese Fläche ist erfahrungsgemäß den geringsten Belastungen unterworfen.

Denkbare Werkstoffe für das Bauteil sind vorzugsweise gummiähnliche Werkstoffe, Elastomere, thermoplastische Elastomere, thermoplastische Polyurethane oder Polytetrafluorethylen. Das Bauteil kann aber auch als Metalldichtung, beispielsweise als Zylinderkopfdichtung ausgebildet sein. Die Kennzeichnung, die als topographische Kennzeichnung in die Tiefe des Materials des Elementes eingebracht ist, trägt in codierter Form Daten zu dem Produkt, dem Hersteller und weitere Informationen. Die Codierung erlaubt die Kennzeichnung sowie eine fälschungssichere Identifikation des Bauteils und eine eindeutige Zuordnung des Bauteils zu einem Hersteller sowie gegebenenfalls Informationen zu Produktions-Chargen, wobei jedes einzelne Bauteil mit einer durchlaufenden Seriennummer versehen werden kann. Die Kennzeichnung bildet also ein Echtheitsmerkmal. Bevorzugt wird die Kennzeichnung mittels einer Laserbearbeitung in das Element eingebracht, da die Lasermarkierung direkt auf das Bauteil aufgetragen ist und dadurch das Material an sich markiert ist. Durch die Laserbehandlung erfolgt ein Materialabtrag mit einer vorgewählten Tiefe. Daher ist es nicht möglich, die Markierung von dem Bauteil zu entfernen, ohne das Bauteil zu beschädigen. Weiter ist vorteilhaft, dass die Lasermarkierung berührungslos erfolgt und dadurch keine Verformung des Bauteils mit einer daraus folgenden Verfälschung der Kennzeichnung vorkommen kann. Des Weiteren wird die Kennzeichnung im Anschluss an die Herstellung auf das fertige Produkt aufgetragen. Es können daher Herstellungsdaten, wie Herstellungsdatum und Chargennummer sowie andere Qualitätsmerkcnale als weitere Information auf das Bauteil im Anschluss aufgebracht werden. Die Lasermarkierung wird oberflächlich aufgetragen und ist daher besonders einfach aufzubringen und zu detektieren. Des Weiteren wird kein Fremdmaterial in das Bauteil eingebracht, welche frei gesetzt werden könnten und unerwünschte Wirkungen verursachen könnten. Die Kennzeichnung ist mit vergleichsweise einfachen optischen Mitteln auslesbar. Insbesondere gegenüber elektronischen Kennzeichnungen, wie beispielsweise integrierte Speicherbausteine, ist die optische Kennzeichnung durch einen Laser kostengünstig und daher auch für preiswerte Massenbauteile geeignet. Die optische Kennzeichnung eignet sich insbesondere auch zur Kennzeichnung gekrümmter, dreidimensionaler Flächen. Denkbare Bauteile, die mit der erfindungsgemäßen Kennzeichnung versehen sein können, sind beispielsweise Radialwellendichtringe, O-Ringe, X-Ringe, Quadringe, Gummibälge, Membranen, Hydraulikdichtungen, Pneumatikdichtungen und ähnliche Bauteile.

### Kurzbeschreibung der Zeichnung

Einige Ausführungsbeispiele des erfindungsgemäßen Bauteils werden nachfolgend anhand der Figuren näher erläutert. Diese zeigen, jeweils schematisch:
- Fig. 1: ein Bauteil als O-Ring ausgebildet;
- Fig. 2: ein Bauteil mit einer Kennzeichnung mit ungeradem Begrenzungsrand;
- Fig. 3: ein Bauteil mit einer segmentierten Kennzeichnung;
- Fig. 4a: ein Bauteil mit einer Kennzeichnung enthaltend Zeichen die zueinander verdreht sind
- Fig. 4b: ein Bauteil mit einer Kennzeichnung enthaltend Zeichen die zueinander verdreht sind;
- Fig. 4c: ein Bauteil mit einer Kennzeichnung enthaltend Zeichen die zueinander versetzt angeordnet sind;
- Fig. 5: das Bauteil nach Figur 1 im Querschnitt.

### Ausführung der Erfindung

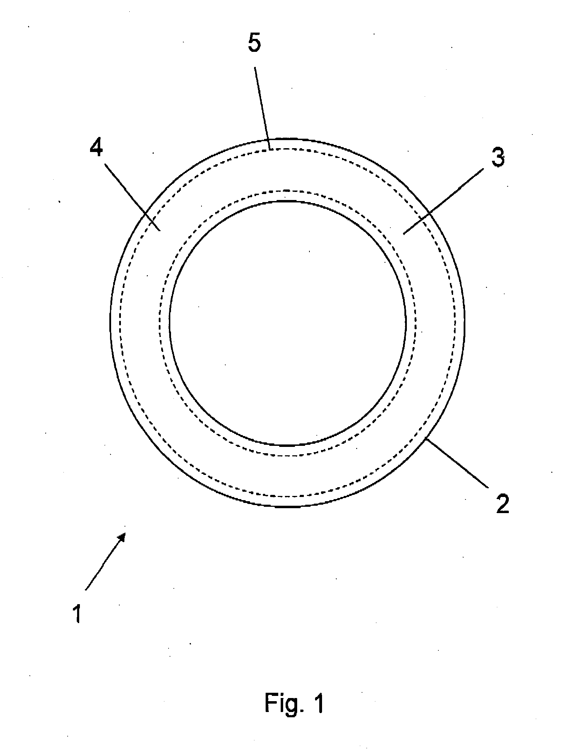

Figur 1 zeigt ein Bauteil 1, hier einen O-Ring. Das Bauteil besteht aus einem Element 2 aus elastomerem Werkstoff mit einer gekrümmten Oberfläche 3, auf die eine codierte elektronisch auslesbaren Kennzeichnung 4 aufgebracht ist, die als topographische Kennzeichnung 4 in die Oberfläche eingebracht ist. Dabei ist die Kennzeichnung 4 derart ausgebildet ist, dass sie mit einem Auslesegerät in zwei Dimensionen auslesbar ist. Dazu weist die Kennzeichnung 4 eine nicht-rechteckige Gestaut und einen ungeraden Begrenzungsrand 5 auf. In dieser Ausführung ist die Kennzeichnung 4 kreisringförmig und erstreckt sich in einem Bereich der Oberfläche mit einer Erstreckung in Umfangsrichtung, so dass in den Randbereichen nur geringe Verzerrungen auftreten und die Kennzeichnung 4 mit einem einfachen Auslesegerät auslesbar ist. Die Breite der Kennzeichnung 4 ist dabei vorzugsweise so gewählt, dass sie maximal dem 0,8-fachen des Durchmessers des Elementes 2 entspricht. Eine derartige Kennzeichnung 4 ist grundsätzlich auf allen möglichen gekrümmten Elementen 2 denkbar. So kann das Element 2 beispielsweise Teil des Dichtelementes oder eines Elastomerformteils sein.

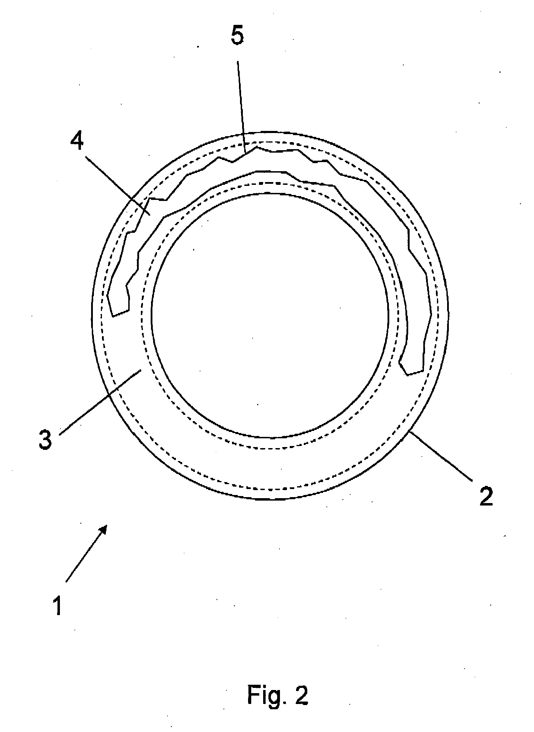

Figur 2 zeigt ein Bauteil 1 gemäß Figur 1, wobei der Begrenzungsrand 5 der Kennzeichnung 4 in dieser Ausgestaltung als "Freihandlinie" ausgebildet ist und einen besonders unebenen Verlauf aufweist. Die Kennzeichnung 4 kann dabei auch in Form von Zeichen oder graphischen Elementen angeordnet sein. Die Kennzeichnung 4 ist jeweils in einem Bereich des Elementes 2 angebracht, der nur eine geringe Verzerrung verursacht.

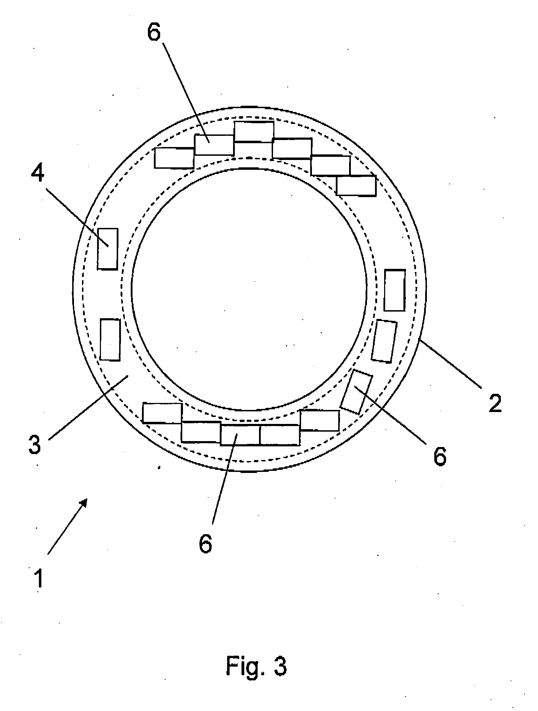

Figur 3 zeigt ein Bauteil 1, hier einen O-Ring. Das Bauteil besteht aus einem Element 2 aus elastomerem Werkstoff mit einer gekrümmten Oberfläche 3, auf die eine codierte elektronisch auslesbaren Kennzeichnung 4 aufgebracht ist, die als topographische Kennzeichnung 4 in die Oberfläche eingebracht ist. Dabei ist die Kennzeichnung 4 derart ausgebildet ist, dass sie mit einem Auslesegerät in zwei Dimensionen auslesbar ist. Dazu ist die Kennzeichnung 4 in Segmente 6 eingeteilt, wobei ein Teil der Segmente 6 unmittelbar aneinander angrenzen und ein Teil der Segmente 6 voneinander beabstandet sind. Des Weiteren sind die Segmente 6 zueinander versetzt und teilweise zueinander verdreht ausgerichtet.

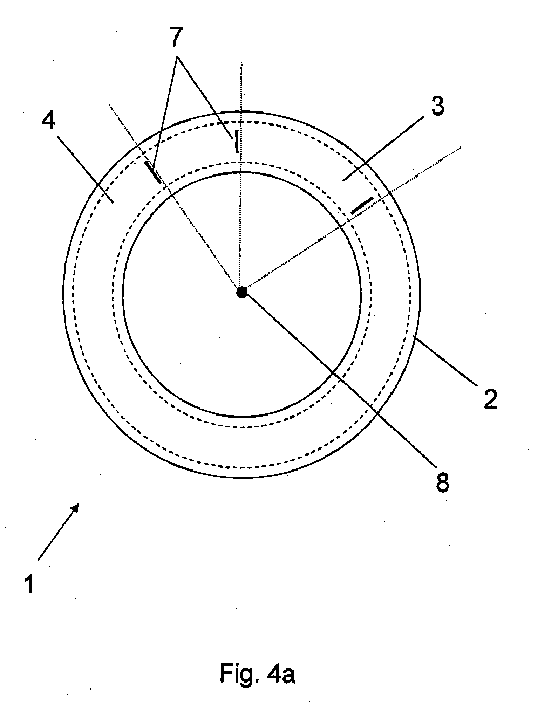

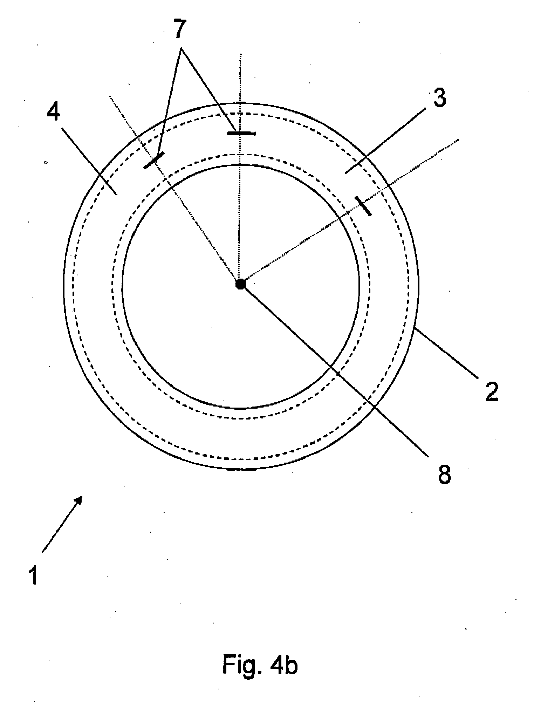

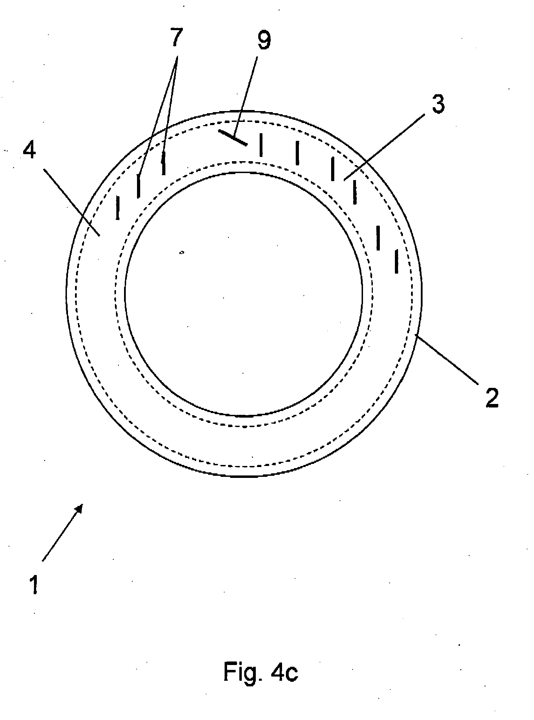

Die Figuren 4a, 4b und 4c zeigen ein Bauteil 1, hier einen O-Ring. Das Bauteil 1 besteht aus einem Element 2 aus elastomerem Werkstoff mit einer gekrümmten Oberfläche 3, auf die eine codierte elektronisch auslesbaren Kennzeichnung 4 aufgebracht ist, die als topographische Kennzeichnung 4 in die Oberfläche eingebracht ist. Dabei ist die Kennzeichnung 4 derart ausgebildet ist, dass sie mit einem Auslesegerät in zwei Dimensionen auslesbar ist. Die Kennzeichnung 4 enthält einzelne auslesbare Zeichen 7. Bei dem Ausführungsbeispiel gemäß Figur 4a sind die Zeichen 7 strahlenförmig und bei dem Ausführungsbeispiel gemäß Figur 4b sind die Zeichen tangential zu einem gemeinsamen Mittelpunkt 8 ausgerichtet. Figur 4c zeigt ein Ausführungsbeispiel bei dem die Zeichen 7 zueinander versetzt angeordnet sind. Dabei sind die Zeichen 7 parallel innerhalb der Kennzeichnung 4 verschoben. Ein Referenzzeichen 9 verbessert die Auslesbarkeit.

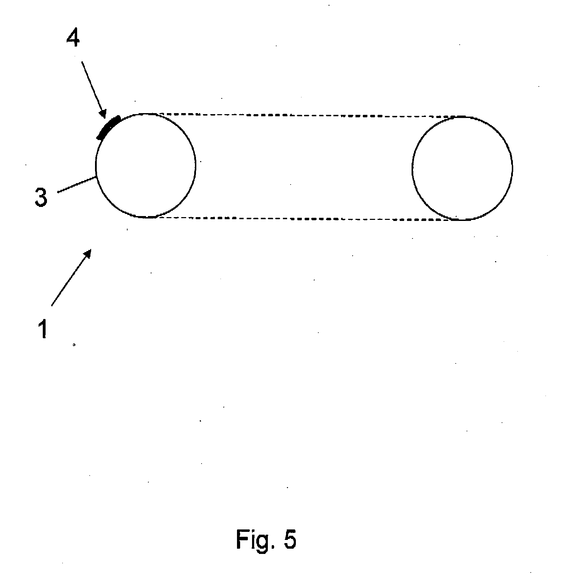

Figur 5 zeigt die Anordnung der Kennzeichnung 4 auf einem Element, hier einem O-Ring, in einem Zwischenbereich zwischen axialer und radialer Dichtfläche.

## Patentansprüche

1. Bauteil (1) mit zumindest einem Element (2) mit einer gekrümmten Oberfläche (3), wobei das Element (2) mit einer codierten elektronisch auslesbaren Kennzeichnung (4) versehen ist, die als topographische Kennzeichnung (4) in die Oberfläche eingebracht ist, **dadurch gekennzeichnet, dass** die Kennzeichnung (4) derart ausgebildet ist, dass sie mit einem Auslesegerät in zwei Dimensionen auslesbar ist.

2. Bauteil nach Anspruch 1**, dadurch gekennzeichnet, dass** die Kennzeichnung (4) eine nicht-rechteckige Gestalt aufweist.

3. Bauteil nach Anspruch 1 oder 2, **dadurch gekennzeichnet, dass** die Kennzeichnung (4) einen ungeraden Begrenzungsrand (5) aufweist.

4. Bauteil nach Anspruch 1 oder 2, **dadurch gekennzeichnet, dass** die Kennzeichnung (4) in Segmente (6) eingeteilt ist.

5. Bauteil nach Anspruch 4, **dadurch gekennzeichnet, dass** die Segmente (6) unmittelbar aneinander angrenzen oder voneinander beabstandet sind.

6. Bauteil nach Anspruch 4 oder 5, **dadurch gekennzeichnet, dass** die Segmente (6) zueinander versetzt ausgerichtet sind.

7. Bauteil nach Anspruch einem der Ansprüche 4 bis 6, **dadurch gekennzeichnet, dass** die Segmente (6) zueinander verdreht ausgerichtet sind.

8. Bauteil nach einem der Ansprüche 1 bis 7, **dadurch gekennzeichnet, dass** die Kennzeichnung (4) einzelne auslesbare Zeichen (7) enthält die zueinander versetzt angeordnet sind.

9. Bauteil nach Anspruch 6, **dadurch gekennzeichnet, dass** die Kennzeichnung (4) einzelne auslesbare Zeichen (7) enthält, die um einen gemeinsamen Mittelpunkt (8) angeordnet sind.

10. Bauteil nach einem der Ansprüche 1 bis 8, **dadurch gekennzeichnet, dass** sich die Kennzeichnung (4) über mehrere Elemente (2) des Bauteils (1) erstreckt.

11. Bauteil nach einem der Ansprüche 1 bis 9, **dadurch gekennzeichnet, dass** das Element (2) ein O-Ring oder der elastomere Abschnitt eines Dichtelementes ist.
